# EUROPEAN PATENT APPLICATION

(11) **EP 4 470 832 A1**
(43) Date of publication of application: **04.12.2024**
(21) Application number: 23175905.1
(22) Date of filing: 29.05.2023
(51) Int. Cl.: B60P 3/00, A47B 57/04, A47B 81/00, A47B 95/04, A47B 96/14

(54) **VEHICLE SHELVING SYSTEM**

(71) Applicant: Modul-System HH AB, 431 22 Mölndal (SE)
(72) Inventor: Carlsson, Anders, SE-422 50 HISINGS BACKA (SE)
(74) Representative: AWA Sweden AB

(57) **Abstract**

The disclosure relates to a shelving system (1) for a cargo space of a vehicle, the shelving system (1) comprising: a first and a second fastening rail (10) configured to be fastened to an inner wall (2) defining said cargo space, and comprising a first and a second rail portion (11a-b), each rail portion (11a-b) comprising at least one attachment groove (12) extending along a longitudinal axis (LA) of the respective rail portion (11a-b), wherein, for each fastening rail (10), the respective first and second rail portions (11a-b) are pivotably connected to each other; and at least one shelf (13) being configured to be attached least one respective attachment groove (12) of the first or the second rail portion (11a-b) of the corresponding first or second rail portion (11a-b) of the second fastening rail (10) and wherein the first and second rail portions (11a-b) are arranged at an angle in relation to each other as seen in a plane perpendicular to said inner wall (2) defining said cargo space.

## Description

### Field of the disclosure

The disclosure relates to shelving systems for vehicles used to transport goods, e.g., foodstuffs. The disclosure also relates to a vehicle comprising such a shelving system.

### Technical Background

When designing a shelving system for vehicles, the designer typically considers a plurality of design criteria. The shelving system should be robust and, at the same time, lightweight. The robustness of the shelving system is of importance since the system may be exposed to heavy loads by the goods that may be placed thereon. However, a vehicle has a load capacity that must not be exceeded, and therefore the shelving system, by itself, needs to contribute as little as possible to the total weight of the load. Hence, most shelving systems of this sort are made of lightweight material. Another design criterion to consider is that the shelving system needs to be space efficient, both when used and not in use. Another criterion may be that the vehicle's cargo space interior need to be easily cleaned, especially when soiling goods are to be transported. Additionally, the internal space and layout of a vehicle can vary depending on, e.g., vehicle model. Lastly, a vehicle with the intended use of transporting goods that need to be kept at a specific temperature, e.g., refrigerated food, is desirously adapted to maintain the wanted temperature in an energy-efficient way.

In US007338110 there is disclosed a rack and shelf system for cargo vehicles. The rack and shelf system is, however, difficult to efficiently adapt to varying needs.

In US 011470961 there is a disclosed vehicle shelf system with pivotable shelves. The shelf system does not adequately address the design criteria of being efficiently adaptable to varying needs and contributing to an energy-efficient environment within the vehicle.

Thus, there is still a need for a shelving system adequately addressing at least some of the design criteria mentioned above.

### Summary of the disclosure

It is an object of the present disclosure to alleviate at least some of the aforementioned issues by providing a shelving system that is lightweight, robust, and easily adaptable to varying needs of a vehicle for transporting goods. This and other objects which will be evident from the following description is achieved by a shelving system for a cargo space of a vehicle having the features defined in claim 1.

According to a first aspect of the present disclosure, a shelving system for a cargo space of a vehicle is provided, the shelving system comprising: a first and a second fastening rail configured to be fastened to an inner wall defining said cargo space, each fastening rail having a longitudinal extension and comprising a first and a second rail portion, each rail portion having an extension along said longitudinal extension and comprising at least one attachment groove extending along a longitudinal axis of the respective rail portion, wherein, for each fastening rail, the respective first and second rail portions are pivotably connected to each other; and at least one shelf, each shelf comprising a first end portion and second end portion, each end portion being configured to be attached to at least one attachment groove; wherein in an assembled state of the shelving system, for each shelf, the first end portion is attached to at least one respective attachment groove of the first or the second rail portion of the first fastening rail, whereas the second end portion is attached to at least one respective attachment groove of the corresponding first or second rail portion of the second fastening rail and wherein the first and second rail portions are arranged at an angle in relation to each other as seen in a plane perpendicular to said inner wall defining said cargo space.

Since the respective first and second rail portions are pivotable connected to each other, a shelving system that can be mounted on a surface or surfaces with different inclinations is provided. This is advantageous since different vehicle models may have different designs of the car body, and the inner wall of the cargo space may thus not be linear.

Another advantage of the embodiment is that the shelves may be placed at continuous height positions along the extension of the attachment grooves. This is an advantage since it provides for a modular solution where goods of varying sizes may fit onto the shelving system. The attachment grooves also serve the purpose of directing fluids such that the shelving system may be easily rinsed when the shelving system is to be cleaned.

The vehicle, wherein the shelving system is to be mounted onto the inner wall of the vehicles cargo space, may be a vehicle where goods of various sorts are to be transported e.g., a construction vehicle. One specific construction vehicle may be a refrigerated van configured to transport food products to e.g., restaurants, stores, and private individuals.

The shelving system may be made from, e.g., aluminum or steel.

Moreover, the fastening rails provides for the shelving system to be fastened to the cargo space wall of the vehicle and each rail portion may comprise an attachment surface configured to be arranged on the inner wall defining the cargo space. Each rail portion may comprise an attachment surface configured to be arranged on said inner wall defining said cargo space. The respective first and second rail portion may further comprise at least one attachment surface arranged to be in contact with the cargo space wall of the vehicle. The attachment surface may have a width extension extending in a direction orthogonal to the longitudinal axis of the respective first or second rail portion. The width extension preferably being 5-10cm, more preferably 7-1 0cm. The at least one attachment surface may extend at least substantially along a longitudinal extension of the respective first or second rail portion. Further, the attachment surface may be provided with adhesive. An advantage of this design is that the attachment surface increases the area which is to be adhesively fastened to the cargo space wall, which enhances the possibility for good adhesive properties. Additionally, fastening by adhesive means provides for a fast procedure of attaching the fastening rails to the inner wall and the inner wall does not have to be exposed to invasive measures that damage the surface, e.g., machining of the wall. However, the attachment surface may also enable the shelving system to be mechanically fastened to the cargo space wall by e.g., screws or rivets. The first and second fastening rails may be provided with a bracket comprising a through-hole configured to receive a means for fastening, such as a screw or a nail. Such bracket may be arranged to be in contact with the cargo space wall. The bracket may further comprise several through-holes.

It is to be noted that the fastening rail may comprise additional respective rail portions, e.g., a respective third rail portion. An additional respective third rail portion may be arranged to be connected to a respective second rail portion. Alternatively, an additional respective third rail portion may be arranged to be connected to a respective first rail portion. Similarly, this would follow any additional respective rail portion. This enables an adaptive fastening rail. It is to be noted that the respective rail portions may have different lengths relative to each other. It may be noted that the shelving system may be fastened to the inner wall such that it does not abut the floor. This allows for a space efficient solution. This is also an advantage when the cargo space of the vehicle is to be cleaned by rinsing of the cargo space. It is advantageous to have as few spaces as possible where dirt and fluids can get stuck, wherein corners are one example of such spaces. A shelving system with few spaces where dirt and liquids can get stuck, provides for a hygienic transport solution. This is of high importance when goods with requirements of a certain hygienic standard, e.g., food products, are to be transported.

By the at least one attachment groove extending along a longitudinal axis of the respective first and second rail portion, the shelving system provides a modular set-up enabling adaption to varying needs, since the attachment grooves allow a shelf to be fastened to the respective first or second rail portions at any position of a continuous set of positions. It is to be understood that the extension of the attachment groove may be along an entire or a partial extension of the respective first or second rail portion. As mentioned, the respective first and second rail portion may comprise more than one attachment groove. In such instance, the attachment grooves of the respective first or second rail portion may be parallel in relation to each other. It is to be understood that the respective first and second rail portion may comprise attachment grooves on both sides. Meaning, there may be attachment groves present on both opposite sides of the respective first and second rail portion. This design provides that one fastening rail can be placed between two other fastening rails and provide support for shelves in two opposite directions. The attachment grooves on each opposite side of the respective first or second rail portion may be parallel to each other. However, this is not necessary.

Moreover, the attachment groove may have a first and a second width, the first width being less than the second width. The first width defines an opening of the attachment groove. The second width defines the widest interior width of the of the attachment groove. The first and second width may be perpendicular to the longitudinal axis of the respective first and second rail portion. It may be noted that the attachment groove may have third width defining a bottom of the attachment groove. The bottom of the attachment groove may provide a flow channel for fluids.

The at least one shelf comprises a first and second end portion, the first and second end portion being located on opposite sides of the shelf. The shelf has a longitudinal extension limited by the respective first and second end. The respective first and second end of the shelf are arranged to be directly or intermediately attached to at least one attachment groove. This is advantageous since goods that are to be transported can have different characteristics, e.g., height, and the position of the shelves may be repositioned along the extension of the grooves to make the goods fit on the shelf. Additionally, the repositioning of a shelf can be managed in a fairly quick manner.

It is to be understood that each shelf, by its respective first and second end, may be fastened to more than one attachment groove. The number of attachment grooves of the respective first and second rail portion may vary and when a shelf is fastened to more than one attachment groove, by its respective first and second end, a higher load capacity may be achieved.

Further, it is to be understood that the respective first and second rail portion may have fastening enabling means other than attachment grooves, such as pre-drilled holes or similar. It may also be understood that the shelf may be directly or intermediately fastened to the respective first or second rail portion.

It is to be noted that the shelving system may be aligned such that the respective first and second rail portion of the fastening rail are linear in relation to each other, i.e., not pivoted, such that the shelving system can be mounted on a linear inner wall of a cargo space.

Preferably, each rail portion may comprise a first end portion and a second end portion, the first end portion being distal to the second end portion, wherein for each fastening rail, the second end portion of the respective first rail portion may be pivotably connected to the first end portion of the respective second rail portion.

Hence, the rotational axis is arranged at a respective end portion of both rail portions, and consequently, the respective extension of each rail portion is primarily located on one side of the rotational axis. Thus, the shelving system may be arranged with the respective fastening rails closer to the inner wall.

It is to be noted that the fastening rail may comprise additional respective rail portions, e.g., a respective third rail portion. An additional respective third rail portion may be arranged to be connected by its respective first end portion to a respective second end portion of a respective second rail portion. Alternatively, an additional respective third rail portion may be arranged to be connected by its respective second end portion to a respective first end portion of a respective first rail portion. Similarly, this would follow any additional respective rail portion. This enables an adaptive fastening rail. It is to be noted that the respective rail portions may have different lengths relative to each other.

For each fastening rail, the respective first and second rail portion may be pivotably connected to each other by a rotation pin fixedly attaching the first rail portion to the second rail portion. The rotation pin may be located on a second end portion of the first rail portion, alternatively, on a first end portion of the second rail portion. The rotation pin may be attached to an attachment portion of the corresponding end portion of the corresponding rail portion. Put differently, if the rotation pin is located on the second end portion of the first rail portion, the attachment portion is located on the first end portion of the second rail portion. Similarly, if the rotation pin is located on the first end portion of the second rail portion, the attachment portion is located on the second end portion of the first rail portion. The rotation pin and the attachment portion are pivotably connected.

The respective first and second rail portion may be pivotably connected to each other by a hinge member. Preferably, the hinge member comprises a first and a second hinge member portion pivotably connected to each other, wherein the second end portion of the first rail portion is connected to the first hinge member portion, and the first end portion of the second rail portion is connected to the second hinge member portion. The first and second hinge member portions may preferably be connected at a respective end thereof such that the first hinge member portion may be pivoted 1-180 degrees in relation to the second hinge member portion. It is to be understood that the first and second hinge member may be pivotably connected at any position along a respective longitudinal extension of the first and second hinge member.

The first or second hinge member portion may further comprise a cover portion extending along the longitudinal extension of the first or second hinge member and being perpendicular to the extension. When the first and second fastening rails are in an angled position in relation to each other, there will be a gap between the hinge member portions. By having a cover portion that covers the gap, prevents that a user might get pinched between the respective first and second rail portion. Additionally, the cover portion makes the appearance of the shelving system more appealing.

Additionally, the first hinge member portion may comprise at least one hole being in fluid connection with the attachment groove of the respective first rail portion. The at least one hole provides that fluids that may flow along the attachment grooves may not be hindered by the hinge member but instead be directed away from the shelving system.

The system may further comprise a plurality of caps, each cap comprising: an axial opening; and a transversal opening being transverse to said longitudinal axis and perpendicular to said axial opening; wherein the axial opening and the transversal opening are fluidly connected to each other, and wherein for each first rail portion, the respective first end portion is provided with one of the plurality of caps.

The respective first and second rail portion may be at least partially hollow to enable a more lightweight product. The respective first and second rail portion may be made from profile elements that are cut in the desirable length in the production process, leaving the respective first and second rail portion having open ends. It may be desired to cover these open ends to hinder dirt and liquids to enter the interior part of the hollow respective first and second rail portion. A cap may be used to cover these open ends. Each first rail portion may comprise a cap arranged at an end portion, distal to said end portion at which the first portion is pivotably connected to the respective second rail portion. Put in other words, the cap may be used to cover an open end which is opposite to the open end covered by the hinge member.

The cap may not only serve as a cover for an end portion of the respective first rail portion, but it may also have the purpose of routing fluids. The axial opening of the cap may be open such that fluids can be collected and simultaneously routed by an inclined bottom surface of the cap. The inclined bottom surface routes liquids to the transversal opening. The inclined bottom surface may be inclined in relation to the axial opening. The cap may further comprise at least two side walls, wherein the at least two side walls form the axial opening and where the inclined bottom surface forms a bottom of the cap connecting the at least two side walls. The transversal opening may be formed by and opening between two opposing side walls or by a side wall comprising an opening. The axial opening, the at least two side walls, inclined bottom surface and the transversal opening may be fluidly connected to each other.

Additionally, the cap may comprise an attachment portion. The attachment portion may be a hole extending through the inclined bottom surface of the cap. In such an instance, the cap can be connected to the respective first rail portion at a receiving portion by e.g., a screw or a rivet. The cap may also be attached to the respective first rail portion by means of e.g., a snap-fit.

By having said cap arranged at the end portion of the respective first rail portion, the cargo space may easily be cleaned by rinsing the cargo space and the shelving system, whereby the cap directs the water away from the shelving system.

Preferably, for each second rail portion, the second end portion is provided with one of said plurality of caps.

It may be noted that the cap arranged at an end portion of the respective second rail portion may be identical to the cap arranged at an end portion of the respective first rail portion. The advantages described for the cap arranged at an end portion of the respective first rail portion are equally applicable with reference to the cap arranged at an end portion of the respective rail portion. Having the same type of cap arranged at all respective end portions of the respective first and second rail portions is beneficial in view of production and assembly efficiency.

Moreover, the cap of the respective second rail portion may be arranged, in an assembled state, to be in fluid connection with the at least on attachment groove of the respective second rail portion. Preferably, each shelf is fastened to the associated attachment grooves by means of T-slot nuts. The T-slot nut enable an easy attachment of the shelves in the attachment grooves and the shelves' height position may be easily adjusted along the extension of the attachment groove. The T-slot nut may have an anchoring portion and a receiving portion is configured to receive an engagement screw. The anchoring portion may e.g., be rectangularly shaped.

Preferably, in the assembled state of the shelving system, each shelf is pivotably fastened to the associated attachment grooves.

An advantage of having the shelf being pivotable in relation to the respective first and second rail portion is that the shelves can be put away when not used by pivoting the shelf such that it becomes parallel with the wall. This makes the shelves space efficient.

As discussed above, the shelf may be connected to the respective first or second rail portion by an intermediate attachment bracket at a respective first or second end portion of the shelf. Preferably, the attachment bracket may be pivotably connected to the respective first or second rail portion. Alternatively, the shelf may preferably be pivotably connected to said attachment bracket. Further, the attachment bracket or the shelf may pivot around a longitudinal axis of said shelf. Pivoting said attachment bracket or shelf may be enabled by e.g., a pivot joint or a rotation pin. Further the shelving system may comprise a gas spring, the gas spring being connected to the shelf at a first end portion and to the attachment bracket at a second end. The gas spring allows the shelf to be pivoted between a vertical and horizontal position in a controlled manner. There may be a gas spring mounted on each side of the shelf.

Preferably, the first and second fastening rail are provided as hollow profile elements. As mentioned, the respective first and second rail portion may be at least partially hollow to enable a more lightweight product. The respective first and second rail portion may be made from profile elements that are cut in the desirable length in the production process, leaving the respective first and second rail portion having open ends.

Each rail portion may be provided with a textured surface for increasing the friction between the rail portion and the shelf in the assembled state. The textured surface may be a pattern extending in parallel with the respective attachment grooves. The textured surface may be formed by notches. The attachment bracket may comprise at least one friction portion which is configured to engage with the textured surface to increase the friction force. The friction portion may be a protrusion arranged to be in contact with the respective fastening rail portion in the assembled state. The protrusion provides a greater friction force on the respective fastening rail when the t-slot nut and the engagement screw are tightened to apply a clamping force on the attachment bracket. The friction portion may be of the same material as the bracket, preferably a metal. The friction portion may be made of plastic.

The advantages discussed above with reference to the shelving system are equally relevant to a vehicle for transporting goods. The vehicle may be a vehicle where goods of various sorts are to be transported e.g., a construction vehicle. One specific construction vehicle may be a refrigerated van configured to transport food products to e.g., restaurants, stores, and private individuals.

It may be noted that the use of first, second, third, fourth, fifth, etc. are mainly to be seen as labels facilitating reading and that it does not necessarily mean that there need to be all the intervening numbers of portions present. It may e.g., be noted that it is contemplated to have a design where there is a first portion, a second portion, a third portion and a fifth portion, with the fourth portion being omitted. However, to facilitate reading, we have consistently used the numbering first, second, third, fourth, etc., as labels, and in a sense based on an embodiment including all conceivable portions.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise.

### Brief description of the drawings

The disclosure will by way of example be described in more detail with reference to the appended schematic drawings, which shows exemplary embodiments of the disclosure, wherein:
Fig. 1 is a schematic perspective view of a shelving system when not assembled to an inner wall of a cargo space.
Fig. 2 is a schematic perspective view of a vehicle wherein the shelving system shown in Fig.1 is assembled on to the inner wall of a cargo space.
Fig. 3 is a schematic perspective view of T-slot nuts, a bracket to be attached to a shelf, and a rail portion in an unassembled state.
Fig. 4 is a schematic perspective view of the features of in Fig. 3 when in an assembled state.
Fig. 5 is a schematic perspective view of a fastening rail, the bracket, and two shelves from a side view perspective.
Fig. 6 is a schematic perspective view of the first or second rail portion seen from a bottom or top view.
Fig. 7a is a schematic perspective view of a cap in an un-assembled state.
Fig. 7b is a schematic perspective view of a cross section of the cap shown in figure Xa.

### Detailed description of embodiments

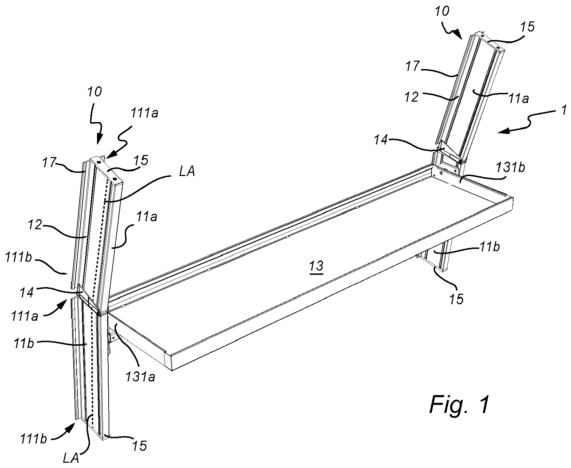

With reference to Figs. 1-7, there is disclosed a shelving system 1 comprising one or more fastening rails 10 and at least one shelf 13. The fastening rail 10 comprises at least two rail portions 11a-b, the rail portions 11a-b being pivotably connected to each other. The respective shelf 13 comprises a first end portion and second end portion 131a-b, each end portion 131a-b being configured to be pivotably attached to at least one attachment groove 12.

With reference to Fig. 1 the shelving system 1 is not yet assembled to an inner wall 2 of a cargo space and the figure show a first and a second fastening rail 10 each comprising a first and second rail portion 11a-b.

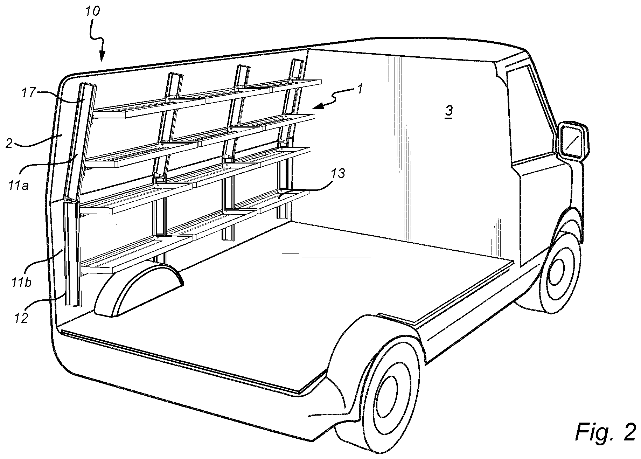

Each rail portion 11a-b comprises an attachment surface 17 configured to be arranged on said inner wall 2 defining said cargo space. The attachment surface 17 may have a width extension W4 extending in a direction orthogonal to a longitudinal axis LA of the respective first or second rail portion. The width extension W4 is preferably at least 5-10cm, more preferably at least 7-10cm. The attachment surface 17 extends along a longitudinal extension of the respective first or second rail portion and is arranged to be provided with adhesive to enable the fastening rails 10 to be adhesively fastened to the inner wall 2 of the cargos space, as shown in Fig.2. The attachment surface 17 increases the area which is to be adhesively fastened to the inner wall 2 of the cargo space, which enhances the possibility for good adhesive properties.

In this embodiment, each rail portion 11a-b comprises a first end portion and a second end portion 111a-b, the first end portion 111a being distal to the second end portion 111b. It is to be noted that the first and second end portion 111a-b of each respective rail portion 11a-b refers to the top and bottom end of the respective rail portions 11a-b, when said rail portion 11a-b is in an assembled state.

For each fastening rail 10, the second end portion 111b of the respective first rail portion 11a is pivotably connected to the first end portion 111a of the respective second rail portion 11b. By having the respective first and second rail portions 11a-b pivotably connected to each other at a respective end portion thereof 111a-b, provides that the first and second rail portions 11a-b, in an assembled state of the shelving system 1, may be arranged at an angle in relation to each other. As earlier discussed, this is an advantage when the surface, which the shelving system 1 is to be fastened to, have different inclinations.

It is to be understood that when the respective first and second rail portions 11a-b are in an assembled state, i.e., fastened to the wall 2 of the cargo space, as shown in Fig. 2, the respective first and second rail portions 11a-b are fixed in an angled position in relation to each other. The angled position preferably correlates with the angle of the wall 2 of the cargo space. Consequently, when the respective first and second rail portions 11a-b are in a non-assembled state, i.e., not fastened to the inner wall 2 of the cargo space, as shown in Fig. 1, or where only one of the respective first or second rail portion 11a-b is fastened to the inner wall 2 of the cargo space, the respective first or second rail portion 11a-b may be pivoted in relation to the other.

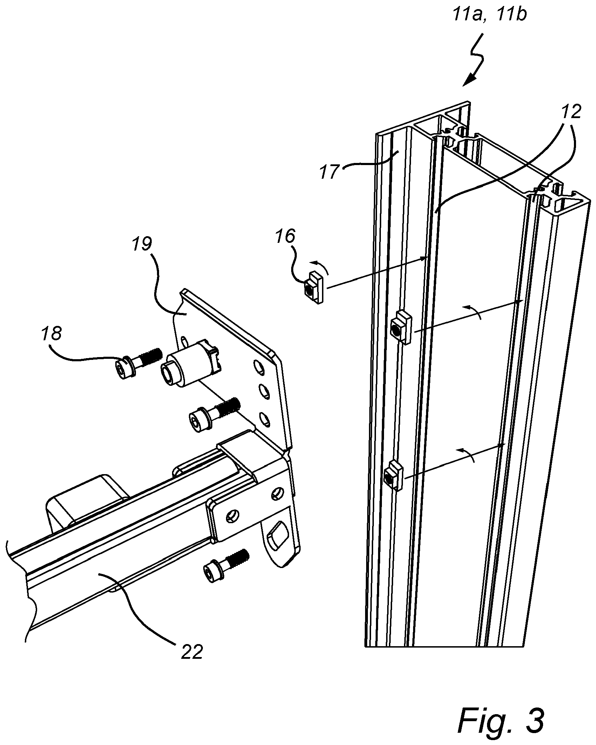

The first and second fastening rails 10 are provided as hollow profile elements, see Figs. 3,4, and 6, which highlights the hollow nature of the profile elements. As mentioned, the respective first and second rail portion 11a-b may be at least partially hollow to enable a more lightweight product. The respective first and second rail portion 11a-b may be made from profile elements that are cut in the desirable length in the production process, leaving the respective first and second rail portion 11a-b having open ends.

As shown in Figs. 1-2, the first and second rail portions 11a-b have the same length. However, it is to be noted that the respective rail portions 11a-b may have different lengths relative to each other.

Moreover, it is to be noted that the fastening rail 10 may comprise additional respective rail portions 11a-b, e.g., a respective third rail portion. An additional respective third rail portion may be arranged to be connected by its respective first end portion to a respective second end portion 111b of a respective second rail portion 11b. Alternatively, an additional respective third rail portion may be arranged to be connected by its respective second end portion to a respective first end portion 111a of a respective first rail portion 11a. Similarly, this would follow any additional respective rail portion. This enables an adaptive fastening rail.

As shown in Figs. 1-7, the first and second rail portion 11a-b has an extension along a longitudinal axis LA and comprises two attachment grooves 12. In the embodiment shown in Figs. 1-7, the two attachment grooves 12 of a respective first or second rail portion 11a-b are parallel to each other. The attachment grooves 12 allow a shelf 13 to be fastened to the respective first or second rail portions 11a-b at any desired position. Further, the attachment groove 12 extends between the respective first and second end portion 111a-b of the respective first and second rail portion 11a-b.

The attachment groove 12 have a first and a second width W1, W2, also shown in Figs. 3, 4, and 6, the first width W1 being less than the second width W2. The first width defines an opening of the attachment groove 12. The second width W2 defines the widest interior width of the of the attachment groove 12. The first and second width W1, W2 being perpendicular to the longitudinal axis LA of the respective first and second rail portion 11a-b. The attachment groove 12 further has a third width W3 defining a bottom of the attachment groove 12. The bottom of the attachment groove 12 may provide a flow channel 121 for fluids.

As is shown in Figs. 1-4, and 6, the respective first and second rail portion 11a-b comprises attachment grooves 12 on both sides. Meaning, there is attachment groves 12 present on both opposite sides of the respective first and second rail portion 11a-b. This design provides that one fastening rail 10 can be placed between two other fastening rails 10 and provide support for shelves 13 in two opposite directions. The attachment grooves 12 on each opposite side of the respective first or second rail portion 11a-b are parallel to each other. However, it is to be understood that this is not necessary.

Further, in the embodiment shown in Figs. 1-7, the extension of the attachment groove 12 extends along the entire extension of the respective rail portion 11a-b. However, the attachment groove's 12 extension may in another embodiment extend partially along the extension of the respective first or second rail portion 11a-b.

The respective first and second rail portion 11a-b may, not shown in any of the figures, comprise only one attachment groove 12 or comprise more than two attachment grooves 12 on each opposite side of the respective first or second rail portion. In such instance, the attachment grooves 12 of the respective first or second rail portion 11a-b may be parallel in relation to each other.

As shown in Fig. 1, the shelving system 1 comprises one shelf 13 arranged between the respective second rail portion 11b of the first and second fastening rail 10. When the shelf 13 is in a horizontal position, as shown in Figs. 1-2, goods can be placed upon the shelf 13. However, it is to be understood that the shelf 13 can be arranged in a vertical position, not shown in any of the figures. The vertical position of the shelf 13 may also be referred to a stowed position. The shelf 13 is to be positioned in its stowed position when the shelf 13 is not to be used.

Moreover, the shelves 13 shown in Figs. 1-2, each comprises a first end portion and second end portion 131a-b being located on opposite sides of the shelf, and each end portion 131a-b being configured to be attached to at least one attachment groove 12. In an assembled state of the embodiment, each shelf 13 has its first end portion 131a attached to two respective attachment grooves 12 of the first or the second rail portion 11a-b of the first fastening rail 10, whereas the second end portion 131b is attached to two respective attachment grooves 12 of the corresponding first or second rail portion 11a-b of the second fastening rail 10. It is to be understood that a corresponding respective first or second rail portion 11a-b of the other fastening rail 10 refers to two fastening rails 10 mounted parallel to each other on the inner wall 2 of the cargo space, such that a shelf 13 may be fastened between a respective first rail portion 11a of one of the fastening rails 10 and a respective first rail portion 11a of another fastening rail, similarly, a shelf 13 may be fastened between a respective second rail portion 11b of one of the fastening rails 10 and a respective second rail portion 11b of the other fastening rail 10.

Moreover, the shelves have a longitudinal extension limited by the respective first and second end portion 131a-b. The respective first and second end 131a-b of the shelf 13 are arranged to be directly or intermediately attached to the attachment grooves 12 of the respective first or second rail portions 11a-b of the first and second fastening rails 10. As shown in Figs. 1-4, and 5, the shelves 13 are intermediately attached to the fastening rails 10, by an attachment bracket 19.

The attachment grooves 12 allow the fastening rails 10 to be mounted at different heights, while the shelves 13 still may be fastened parallel to the floor of the vehicle 3.

It is to be understood that each shelf 13, by its respective first and second end 131a-b, may be fastened to only one attachment groove 12 or it may be attached to more than two attachment grooves 12.

Further, it is to be understood that the respective first and second rail portion 11a-b may have fastening enabling means other than attachment grooves 12, such as pre-drilled holes or similar. In such case, the shelf 13 may be directly or intermediately attached to the respective first or second rail portion 11a-b of the first and second fastening rail 10.

Moreover, as shown in Figs. 1, 2 and 5, the respective first and second rail portion 11a-b may be pivotably connected to each other by a hinge member 14. The hinge member 14 may be located between the second end portion 111b of the first rail portion 11a and the first end portion 111a of the second rail portion 11b. The hinge member 14 comprises a first and a second hinge member 141a-b portion pivotably connected to each other, wherein the second end portion 111b of the first rail portion 11a is connected to the first hinge member portion 141a, and the first end portion 111b of the second rail portion 11b is connected to the second hinge member portion 141b. The first and second hinge member portions 141a-b are in the shown embodiment connected to each other at a respective end thereof such that the first hinge member portion 141a may be pivoted 1-180 degrees in relation to the second hinge member portion 141b. It is to be understood that the first and second hinge member portion 141a-b may, in another embodiment not shown in any of the figures, be pivotably connected at any position along a respective longitudinal extension of the first and second hinge member portion 141a-b. The second hinge member portion 141b may further comprise a cover portion 142 extending along the longitudinal extension of the second hinge member portion 141b and being perpendicular to said longitudinal extension. When the first and second fastening rails 10 are in an angled position in relation to each other, there will be a gap between the hinge member portions 141a-b. By having a cover portion 142 that covers the gap, prevents that a user might get pinched between the respective first and second rail portion 11a-b. Additionally, the cover portion 142 makes the appearance of the shelving system 1 more appealing. The first hinge member portion 141a may comprise at least one hole being in fluid connection with the attachment groove 12 of the respective first rail portion 11a. The at least one hole provides that fluids that may flow along the attachment grooves 12 may not be hindered by the hinge member 14 but instead be directed away from the shelving system 1.

In another embodiment, not shown in any of the figures, the respective first and second rail portion 11a-b may be pivotably connected to each other by a rotation pin fixedly attaching the first rail portion 11a to the second rail portion 11b. The rotation pin may be located on a second end portion 111b of the first rail portion 11a, alternatively, on a first end portion 111a of the second rail portion 11b. The rotation pin may be attached to an attachment potion of the corresponding end portion 111a-b of the corresponding rail portion 11a-b. Put differently, if the rotation pin is located on the second end portion 111b of the first rail portion 11a, the attachment portion is located on the first end portion 111a of the second rail portion 11b. Similarly, if the rotation pin is located on the first end portion 111a of the second rail portion 11b, the attachment portion is located on the second end portion 111b of the first rail portion 11a.

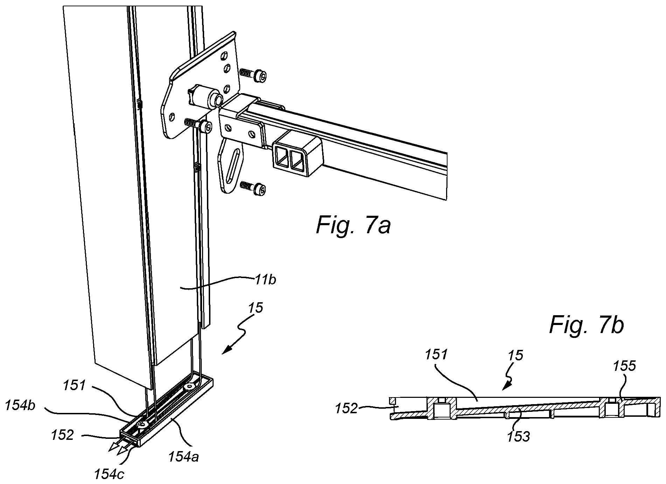

As shown in Fig. 1, each first and second rail portion 11a-b comprises a cap 15 at its respective first or second end portion 111a-b. As mentioned, the respective first and second rail portion 11a-b may be at least partially hollow to enable a more lightweight product which may result in that the rail portions 11a-b have open ends. To hinder dirt and liquids to enter the interior part of the hollow respective first and second rail portion 11a-b the open ends are covered by a respective cap 15. The first rail portion 11a comprises a cap 15 arranged at a first end portion 111a, distal to said end portion 111b at which the first rail portion 11a is pivotably connected to the respective second rail portion 11b. Put in other words, the cap 15 is used to cover an open end which is opposite to the open end covered by the hinge member 14. Further, each second rail portion 11b comprises a cap 15 arranged at a second end portion 111b. The caps 15 are described in more detail with reference to Figs. 7a and 7b.

With reference to Fig. 2, the shelving system 1 is assembled to an inner wall 2 defining a cargo space of a vehicle 3. The shelving system 1 comprises four fastening rails 10 each having a longitudinal extension and comprising a first and second rail portion 11a-b. Each fastening rail is adhesively fastened to the inner wall 2. However, it is to be understood that, in another embodiment, not shown in any of the figures, the fastening rails 10 may be fastened to the inner wall 2 of the cargo space with other means than adhesively, e.g., mechanically with screws or rivets. In such case, the attachment surface 17 may be used to enable the shelving system 1 to be fastened to the inner wall 2 of the cargo space.

In another embodiment, not shown in any of the figures, the first and second fastening rails 10 may be provided with a bracket comprising a through-hole configured to receive a means for fastening, such as a screw, a rivet, or a nail. Such bracket may be arranged to be in contact with the inner wall 2 of the cargo space. The bracket may further comprise several through-holes.

Further, as shown in Fig. 2, the fastening rails 10 are fastened to the inner wall 2 such that they do not abut the floor of the cargo space. However, the fastening rails 10 may be arranged on the inner wall 2 of the cargo space such that they abut the floor to provide higher load capacity. In such a case, the fastening rails 10 may be fastened to the floor of the cargo space. This can be done adhesively or by, e.g., screws or rivets. However, it is to be understood that it is not necessary to have the fastening rails 10 abutting the floor of the cargo space to enable good load capacity.

As further is shown in Fig. 2, the first and second rail portion 11a-b of each respective fastening rail 10 are arranged in an angle in relation to each other as seen in a plane perpendicular to said inner wall 2 defining said cargo space. This since the inner wall 2 of the cargo space have two different inclinations in relation to the floor of the cargo space.

As shown in Figs. 1-2, and 5, the first and second rail portion 11a-b of each fastening rail 10 are pivotably connected to each other by a hinge member 14.

Further, it is to be noted that the shelving system 1 may be aligned such that the respective first and second rail portion 11a-b of the fastening rail 10 are linear in relation to each other, i.e., not pivoted, such that the shelving system 1 can be mounted on a linear inner wall 2 of a cargo space.

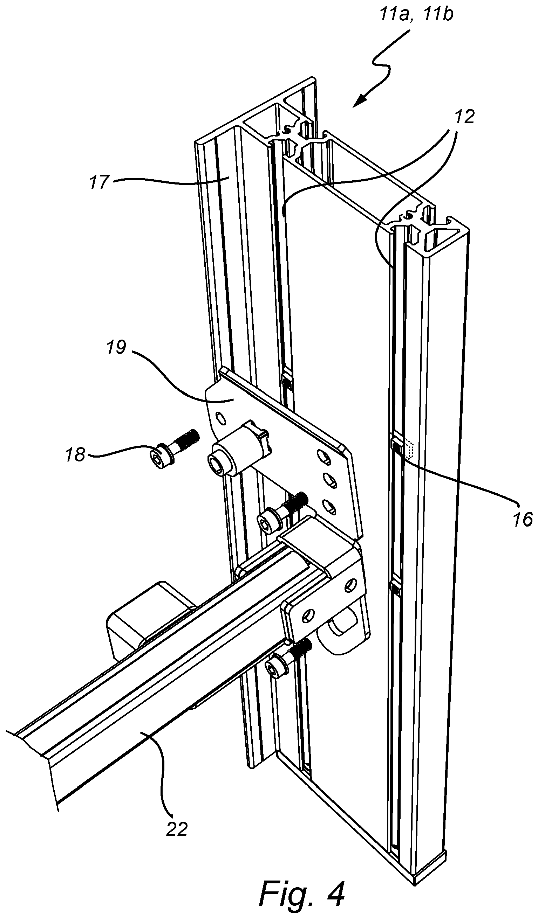

With reference to Fig. 3, each shelf 13 is fastened to the associated attachment grooves 12 by means of T-slot nuts 16. The T-slot nut 16 comprises an anchoring portion and a receiving portion. The anchoring portion is configured to be arranged within the attachment groove 12 and may be rectangularly formed as shown in Figs. 3 and 4. If the anchoring portion is rectangularly formed, two opposing sides of the anchoring portion have a first extension greater than the second extension of the other two opposing sides. Further, the first extension may be equal or less than the first width W1 of the attachment groove 12. The second extension may be greater than the first width W1 of the attachment groove 12 and less than the second width W2 of the attachment groove 12.

The receiving portion is arranged to receive an engagement screw 18 such that the shelf may be interlocked between the T-slot nut 16 and the engagement screw 18.

As shown in Fig.3, the T-slot nut 16 is arranged in an insertion direction such that the T-slot nut 16 may be inserted into the attachment groove 12 of the respective first or second rail portion 11a-b. It may in this context be noted that the term insertion direction is intended to refer to when the T-slot nut 16 is in a position such that the first extension of the T-slot nut 16 is parallel to the first width W1 of the attachment groove 12 of the respective rail portion 11a-b.

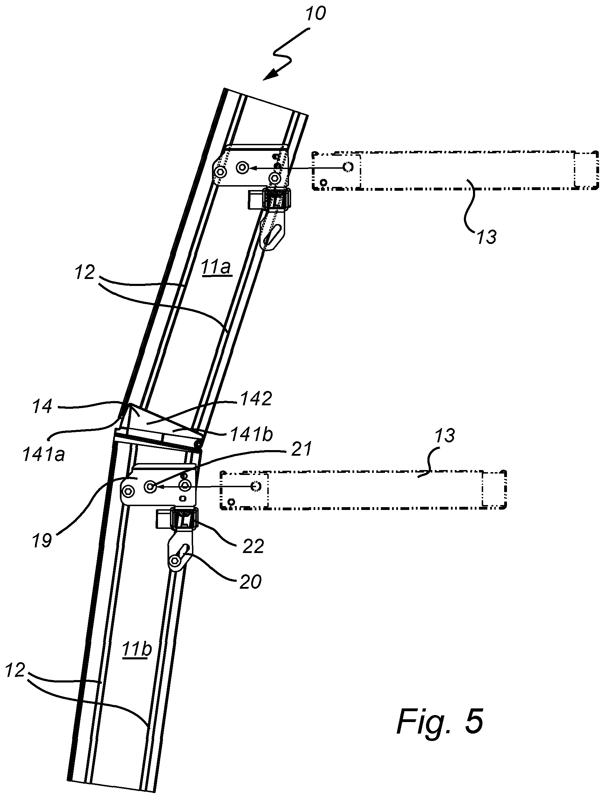

With reference to Fig.4, the T-slot nuts 16 have been inserted into the respective attachment groove 12 of the first or second rail portion 11a-b and thereafter been axially rotated approximately 90 degrees around an axis being perpendicular to the longitudinal axis of the respective rail portion 11a-b. It is to be understood that when the T-slot nut 16 is axially rotated approximately 90 degrees, the first extension of the T-slot nut 16 is perpendicular to the first width W1 of the attachment groove 12. When the T-slot nut 16 is turned such that the first extension is perpendicular to the first width W1 of the attachment groove 12, as shown in Fig.4, the T-slot nut 16 is hindered to be moved in a direction perpendicular to the to the longitudinal axis LA of the respective rail portion 11a-b. However, it is to be understood that the T-slot nut 16 is allowed to be moved freely within the attachment groove 12 along the longitudinal axis LA of the respective rail portion 11a-b, hereafter referred to an adjustment position. It may in this context be noted that the term adjustment position is intended to refer to when the shelf's 13 position is to be changed. In a fixed position, with reference to Fig. 5, an engagement screw 18 is configured to interact with the receiving portion of a respective T-slot nut 16 such that a clamping force occurs and allows the T-slot nut 16 to be held in a fixed position within the attachment groove 12, consequently, the shelf 13 is held in a fixed position. It may in this context be noted that the term fixed position is intended to refer to a position where the T-slot nut 16 and the interconnected shelf 13 is held in a constant position due to the clamping force being greater than the gravitational force of the shelf 13. It is to be understood that the clamping force can be released when the engagement screw 18 and the T-slot nut 16 are loosened in relation to each other, and the T-slot nut 16 is again in the adjustment state.

As shown in Fig. 3-4, and 5, the shelving system 1 further comprises a respective attachment bracket 19 for attaching the shelf 13 to the respective rail portion 11a-b and being configured to be positioned in an intermediate position between the respective first and second end 131a-b of the shelf 13 and the respective first or second rail portion 11a-b of the first and second fastening rail 10. The attachment bracket 19 and the respective first or second rail portion 11a-b may be exposed to the clamping force applied when the T-slot nut 16 and the engagement screw 18 are tightened.

As further shown in Fig. 3-4, and 5, the attachment bracket 19 comprises several through-holes for the engagement screws 18 to be inserted through to reach the respective T-slot nut 16 arranged within the respective attachment groove 12. To enable the attachment bracket 19 to be assembled to the respective first and second rail portion 11a-b at a horizontal position even when said rail portion 11a-b is in an angled position the through-holes on the attachment bracket 19 are positioned differently. As is shown in Fig. 5, two attachment brackets 19 are fastened to a respective first and second rail portions 11a-b being angled in relation to each other, and the engagement screws 18 are inserted into through-holes with different positions. As shown in the same figure, the through-hole can be an oblong through-hole 20 to enable several positions within the same hole or the through-holes may be several circular holes positioned adjacent to each other.

The attachment bracket 19 abuts the respective first or second rail portion 11a-b in the fixed position.

As is shown in Fig. 5, the shelf 13 is arranged to be pivotably connected to a rotational pin 21 of the attachment bracket and a rod 22 extending between two adjacent attachment brackets 19 being arranged on a respective end portion 131a-b of the shelf 13. The shelf 13 is pivoted around a longitudinal axis of said shelf 13. The rod 22, with reference to Figs. 3-4, and 5, provide support for the shelf 13 and enable less load on the rotational pin 21 of the attachment bracket. The rod 22 is rotatably connected to the attachment bracket 19 and follows the movement of the shelf 13.

Further, the shelving system 1 may comprise a gas spring, not shown in any of the figures. The gas spring may be connected to the shelf 13 at a first end and to the attachment bracket 19 at a second end. The gas spring allows the shelf 13 to be pivoted between a vertical and horizontal position in a controlled manner. There may be a gas spring mounted on each side of the shelf 13.

Moreover, the attachment bracket 19 may comprise at least on friction portion, not shown in any of the figures. The friction portion may be a protrusion arranged to be in contact with the respective rail portion 11a-b in an assembled state. The protrusion provides a greater friction force on the respective fastening rail 10 when the T-slot nut 16 and the engagement screw 18 are tightened to apply a clamping force on the attachment bracket 19. The friction portion may be of the same material as the bracket, preferably a metal. The friction portion may be made of plastic. Further, the respective first and second rail portion 11a-b may comprise friction-increasing pattern extending in parallel with the respective attachment grooves 12. The friction-increasing pattern may be notches. The friction portion may be arranged to engage with the friction-increasing pattern to increase the friction force.

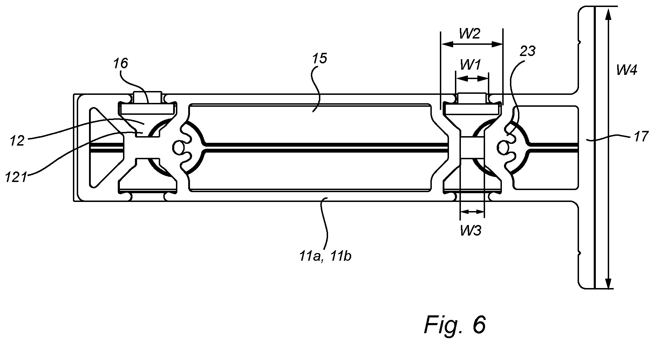

With reference to Fig. 6, the first or second rail portion 11a-b is shown in a bottom or top view. Two T-slot nuts 16 have been inserted into its respective attachment groove 12 and rotated approximately 90 degrees such that they are in the earlier mentioned adjustment position. As shown in Fig. 6, there is a gap between the T-slot nut 16 and the bottom of the attachment groove 12. The bottom of the attachment groove 12 provides a flow channel 121 for fluids. The flow channel 121 allows fluids to flow along the attachment groove 12 towards the second end portion 111b of the first or second rail portion 11a-b. If there would not be a flow channel 121, fluids which flow along the attachment grooves 12 would be stopped by a T-slot nut 16 present in the flow path of the fluid resulting in that fluids and dirt would be collected in the area around the T-slot nut 16, making the shelving system 1 less hygienic. The fluids that have passed the flow channel 121 in the first rail portion 11a exit the shelving system 1 at the second end portion 111b and fluids that have passed the flow channel 121 in the second rail portion 11b are collected and redirected by the cap 15 present at its respective second end portion 111b.

With reference to Figs. 7a and 7b, the cap 15 is described in more detail. Each cap 15 comprises an axial opening 151 and a transversal opening 152. The transversal opening 152 being transverse to the longitudinal axis LA and perpendicular to the axial opening 151. The axial opening 151 and the transversal opening 152 are fluidly connected to each other.

The cap 15 may not only serve as a cover for an end portion 111a-b of the respective first and second rail portion 11a-b, but it may also have the purpose of routing fluids. The axial opening 151 of the cap 15 may be open such that fluids can be collected and simultaneously routed by an inclined bottom surface 153 of the cap 15. The inclined bottom surface 153 routes liquids to the transversal opening 152. The inclined bottom surface 153 is inclined in relation to the axial opening 151. The cap 15, as shown in Fig. 7a, further comprises three side walls 154a-c, wherein the three side walls 154a-c form the axial opening 151 and where the inclined bottom surface 153 forms a bottom of the cap 15 connecting the three side walls 154a-c. The transversal opening 152 is formed by and opening in the side wall 154c facing the inner wall 2 of the cargos pace when the shelving system 1 is assembled to the inner wall 2. In another embodiment, the transversal opening 152 of the cap 15 may be formed between two opposing side walls 154a-b being perpendicular to the inner wall 2 in an assembled state. The axial opening 151, the side walls 154a-c, the inclined bottom surface 153, and the transversal opening 152 are in fluidly connected to each other.

As shown in Figs. 7a and 7b, the cap 15 comprises two attachment portions 155. The attachment portions 155 are formed by a hole extending through the inclined bottom surface 153 of the cap 15. The cap 15 can be connected to the respective first or second rail portion 11a-b at a respective receiving portion 23, shown in Fig. 6, by e.g., a screw or a rivet. In another embodiment, not shown in any of the figures, the cap 15 may be attached to the respective first or second rail portion 11a-b by means of e.g., a snap-fit.

Moreover, as shown in Fig. 7a, the cap 15 of the respective second rail portion 11b is arranged, in an assembled state, to be in fluid connection with the at least on attachment groove 12 of the respective second rail portion 11b. This allows fluids that flow downwards within the attachment grooves 12 of the rail portion 11a-b may be collected by the cap 15 present at the second end portion 111b of the second rail portion 11b and be directed towards the transversal opening 152 where the fluid can exit.

Moreover, in another embodiment not shown, the first end portion 111a of the first rail portion 11a and the second end portion 111b of the second rail portion 11b may be covered by a cap different from the cap 15 described above. Instead of the cap 15 described above, the respective rail portions 11a-b may be covered by a flat cap that only serve the purpose of sealing a hollow first or second rail portion.

Even though it is preferred that the shelving system 1 is designed in accordance with the disclosure in the detailed disclosure of embodiments and the appended drawings, it should be noted that a specific embodiment of a specific component does not necessarily have to be combined with a specific embodiment of another component. Thus, advantages associated with a specific embodiment, including one or more features, of a specific component may be accomplished even though the other component(s) is/are designed in accordance with the more general disclosure under the summary of the disclosure rather than being defined in accordance with the specific embodiment disclosed in the detailed description. It is contemplated that there are numerous modifications of the embodiments described herein, which are still within the scope of the disclosure as defined by the appended claims.

Additionally, variations to the disclosed embodiments can be understood and effected by the skilled person in practicing the claimed disclosure, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A shelving system (1) for a cargo space of a vehicle, the shelving system (1) comprising:
a first and a second fastening rail (10) configured to be fastened to an inner wall (2) defining said cargo space, each fastening rail (10) having a longitudinal extension and comprising a first and a second rail portion (11a-b), each rail portion (11a-b) having an extension along said longitudinal extension and comprising at least one attachment groove (12) extending along a longitudinal axis (LA) of the respective rail portion (11a-b), wherein, for each fastening rail (10), the respective first and second rail portions (11a-b) are pivotably connected to each other; and
at least one shelf (13), each shelf (13) comprising a first end portion and second end portion (131a-b), each end portion (131a-b) being configured to be attached to at least one attachment groove (12); wherein
in an assembled state of the shelving system (1), for each shelf (13), the first end portion (131a) is attached to at least one respective attachment groove (12) of the first or the second rail portion (11a-b) of the first fastening rail (10), whereas the second end portion (131b) is attached to at least one respective attachment groove (12) of the corresponding first or second rail portion (11a-b) of the second fastening rail (10) and wherein the first and second rail portions (11a-b) are arranged at an angle in relation to each other as seen in a plane perpendicular to said inner wall (2) defining said cargo space.

2. The shelving system (1) according to claim 1, wherein each rail portion (11a-b) comprises a first end portion and a second end portion (111a-b), the first end portion (111a) being distal to the second end portion (111b), wherein for each fastening rail (10), the second end (111b) portion of the respective first rail portion (11a) is pivotably connected to the first end portion (111a) of the respective second rail portion (11b).

3. The shelving system (1) according to claim 1 or 2, wherein for each fastening rail (10), the respective first and second rail portion (11a-b) are pivotably connected to each other by a rotation pin fixedly attaching the first rail portion (11a) to the second rail portion (11b).

4. The shelving system (1) according to claim 1 or 2, wherein for each fastening rail (10), the respective first and second rail portion (11a-b) are pivotable connected to each other by a hinge member (14).

5. The shelving system (1) according to claim 2 and 4, wherein the hinge member (14) comprises a first and a second hinge member portion (141a-b) pivotably connected to each other, wherein the second end portion (111b) of the first rail portion (11a) is connected to the first hinge member portion (141a), and the first end portion (111b) of the second rail portion (11b) is connected to the second hinge member portion (141b).

6. The shelving system (1) according to any one of the preceding claims when dependent on claim 2, the system further comprising a plurality of caps (15), each cap (15) comprising:
an axial opening (151); and
a transversal opening (152) being transverse to said longitudinal axis (LA) and perpendicular to said axial opening (151);
wherein the axial opening (151) and the transversal opening (152) are fluidly connected to each other, and
wherein for each first rail portion (11a), the respective first end portion (111a) is provided with one of said plurality of caps (15).

7. A shelving system (1) according to claim 6, wherein for each second rail portion (11b), the second end portion (111b) is provided with one of said plurality of caps (15).

8. The shelving system (1) according to any one of the preceding claims, wherein each shelf (13) is fastened to the associated attachment grooves (12) by means of T-slot nuts (16).

9. The shelving system (1) according to any one of the preceding claims, wherein, in the assembled state of the shelving system (1), each shelf (13) is pivotably fastened to the associated attachment grooves (12).

10. The shelving system (1) according to any one of the preceding claims, wherein the first and second fastening rail (10) are provided as hollow profile elements.

11. The shelving system (1) according to any one of the preceding claims, wherein each rail portion (11a-b) comprises an attachment surface (17) configured to be arranged on said inner wall defining said cargo space.

12. The shelving system (1) according to claim 10, wherein the attachment surface (17) is provided with adhesive.

13. The shelving system (1) according to any preceding claim, wherein each fastening rail (10) is provided with a bracket comprising a through-hole configured to receive a means for fastening, such as a screw or a nail.

14. The shelving system (1) according to any preceding claim, wherein each rail portion (11a-b) is provided with a textured surface for increasing the friction between the rail portion (11a-b) and the shelf (13) in said assembled state.

15. A vehicle (3) for transporting goods, the vehicle (3) comprising a shelving system (1) according to any of the claims 1-13.
